# EUROPÄISCHE PATENTANMELDUNG

(11) **EP 3 975 368 A1**
(43) Veröffentlichungstag der Anmeldung: **30.03.2022**
(21) Anmeldenummer: 20198466.3
(22) Anmeldetag: 25.09.2020
(51) Int. Cl.: H02J 3/32, H02J 3/38, H02J 7/00, H02J 9/06

(54) **UNTERBRECHUNGSFREIE STROMVERSORGUNG BEI WINDENERGIEANLAGEN**

(71) Anmelder: Wobben Properties GmbH, 26607 Aurich (DE)
(72) Erfinder: BUSKER, Kai, 26629 Großefehn (DE)
(74) Vertreter: Eisenführ Speiser

(57) **Zusammenfassung**

Die Erfindung betrifft ein Verfahren (300) zum Betreiben einer Windenergieanlage, umfassend die Schritte: Starten (310) eines Entladevorganges eines elektrischen Speichers einer unterbrechungsfreien Stromversorgung, insbesondere zu einem bestimmten Zeitpunkt; Durchführen (320) des Entladevorganges bis der elektrische Speicher eine vorbestimmte Entladespannung aufweist; Erfassen (330) eines Entladestromes (I_{B_ist}) des elektrischen Speichers während des Entladevorganges; Bestimmen (340) einer Kapazität (C_{B_ist}) des elektrischen Speichers aus dem erfassten Entladestrom;

## Beschreibung

Die vorliegende Erfindung betrifft ein Verfahren zum Steuern einer Windenergieanlage sowie eine solche Windenergieanlage.

Windenergieanlagen sind allgemein bekannt und werden innerhalb eines elektrischen Versorgungsnetzes zumeist als Erzeuger betrieben, d.h. sie speisen elektrische Leistung in das elektrische Versorgungsnetz ein.

Elektrische Versorgungsnetze, auch umgangssprachlich als Stromnetz bezeichnet, sind ein komplexes Netzwerk zur Übertragung und Verteilung elektrischer Energie.

Windenergieanlagen werden üblicherweise an den unterschiedlichsten Standorten auf der Erde aufgestellt, unter anderem in Regionen mit vielen und/oder starken Windereignissen, wie bspw. Orkanen, Hurrikane, Taifunen oder Zyklone.

Diese Windereignisse können teilweise zu Extrem-Lasten an den Windenergieanlagen führen, die es zu verhindern gilt, bspw. durch eine horizontale (Ver-)Stellung der Gondel in den Wind.

Auf Grund des Windereignisses kann es aber dazu kommen, dass die Windenergieanlage oder das elektrische Versorgungsnetz nur bedingt betriebsfähig sind, bspw. ist das Windereignis so stark, dass weder die Windenergieanlage noch das elektrische Versorgungsnetz ordnungsgemäß betrieben werden kann.

Um dennoch die starken Lasten der Windenergieanlage durch das Windereignis unter Kontrolle zu behalten, ist ein aktives Nachfahren der Gondel der Windenergieanlage mittels der sogenannten Windnachführung sinnvoll.

Aufgabe der vorliegenden Erfindung ist es daher, eines der oben genannten Probleme zu adressieren. Insbesondere soll eine Möglichkeit geschaffen werden, die Betriebssicherheit einer Windenergieanlage auch an windreichen Standorten zu erhöhen. Zumindest soll aber eine Alternative zu bisher Bekanntem bereitgestellt werden.

Erfindungsgemäß wird somit ein Verfahren zum Betreiben einer Windenergieanlage vorgeschlagen, umfassend die Schritte: Starten eines Entladevorganges eines elektrischen Speichers einer unterbrechungsfreien Stromversorgung, insbesondere zu einem bestimmten Zeitpunkt; Durchführen des Entladevorganges des elektrischen Speichers der unterbrechungsfreien Stromversorgung bis der elektrische Speicher eine vorbestimmte Entladespannung aufweist; Erfassen eines Entladestromes des elektrischen Speichers während des Entladevorganges und Bestimmen einer Kapazität des elektrischen Speichers aus dem erfassten Entladestrom.

Es wird also insbesondere vorgeschlagen, dass die Windenergieanlage wenigstens eine unterbrechungsfreie Stromversorgung aufweist und bevorzugt wie üblich betrieben wird, insbesondere in einem üblichen bzw. normalen Betrieb.

Die Windenergieanlage ist also bevorzugt, wie nachstehend beschrieben, ausgeführt, und umfasst insbesondere eine unterbrechungsfreie Stromversorgung mit einem elektrischen Speicher, der bevorzugt als Akkumulator ausgeführt ist.

Die unterbrechungsfreie Stromversorgung ist dabei insbesondere dazu eingerichtet, wenigstens einen Azimutmotor der Windenergieanlage so mit elektrischer Energie zu versorgen, dass der Azimutmotor die Windenergieanlage, insbesondere die Gondel der Windenergieanlage, in den Wind ausrichten kann, bevorzugt auch während eines Windereignisses, wie bspw. einem Sturm.

Es wird also insbesondere auch vorgeschlagen, bei einem Ausfall des elektrischen Versorgungsnetzes die Windenergieanlage in den Wind auszurichten.

Im (normalen) Betrieb der Windenergieanlage wird nun insbesondere die Funktionsfähigkeit des elektrischen Speichers getestet, insbesondere um sicherzustellen, dass der elektrische Speicher im Bedarfsfall, also bspw. bei Sturm, auch genügend elektrische Energie zur Verfügung stellen kann, um die Gondel der Windenergieanlage auszurichten.

Ein solcher Bedarfsfall besteht bspw. wenn ein Windereignis aufkommt, das zu einer Störung des Betriebes der Windenergieanlage und/oder des elektrischen Versorgungsnetzes führt. Durch das Windereignis kann die Windenergieanlage bspw. nur noch bedingt betriebsfähig sein und sollte, um Beschädigungen von der Windenergieanlage abzuwenden, richtig in den Wind ausgerichtet werden, bspw. über eine Verstellung der Gondel der Windenergieanlage mittels einer Azimutverstellung.

Das Starten des Entladevorganges des elektrischen Speichers erfolgt dabei bspw. durch einen Servicemitarbeiter bevorzugt manuell, bspw. dezentral von außerhalb der Windenergieanlage durch Betätigung eines Knopfes, welcher den Testvorgang in der Windenergieanlage auslöst.

Der Entladevorgang erzeugt dabei insbesondere ein, vorzugsweise vollständiges, Entladen des elektrischen Speichers, insbesondere bis der elektrische Speicher eine vorbestimmte Entladespannung aufweist.

Die vorbestimmte Entladespannung kann auch als Entladeschlussspannung bezeichnet werden und beträgt bspw. ca. 10 V. In einem Beispiel werden 12V-Blei-Kristall-Akkumulatoren verwendet. Besonders vorteilhaft bei diesen Akkumulatoren ist, dass sie niedrigere Temperaturen besser überstehen können. Die "Rated Capacity (10 hour rate) beträgt für diese Akkumulatoren bspw. 66Ah und es werden davon 24 Stück in Reihe verschaltet und somit eine Nennspannung von 288 V bereitgestellt. Ein bidirektionaler DC/DC-Wandler setzt diese Spannung dann auf eine Zwischenkreisspannung von bspw. 550 V bis 700 V hoch. Die Entladeschlussspannung richtet sich dann nach dem Belastungsstrom dieses Akkumulators, und beträgt bspw. zwischen 7 V und 12 V.

In einer bevorzugten Ausführungsform wird der elektrische Speicher, insbesondere der Ackumulator, ständig in Erhaltungsladung gehalten und kommt direkt bei einem Netzausfall zum Einsatz. Dabei wird in erster Linie ein erster Teil der Windenergieanlage aus dem Akkumulator versorgt. Hierzu gehört bspw. das Windmessgerät zur Überwachung der Windgeschwindigkeit und der Windrichtung. Wird dann erkannt, dass aufgrund des Windereignisses eine Windnachführung notwendig ist, wird ein zweiter Teil der Windenergieanlage bspw. ein Azimutmotor der Windenergieanlage für die Windnachführung der Gondel aus dem Akkumulator versorgt. Nachdem dann die Gondel ausgerichtet wurde, wird die Versorgung für den zweiten Teil wieder abgeschaltet und nur der erste Teil versorgt. Diese Vorgehensweise erhöht insbesondere die Laufzeit des Akkumulators. Das vorstehend oder nachstehend beschriebene Verfahren, also insbesondere der Test des elektrischen Speichers, wird insbesondere nicht durchgeführt, wenn das elektrische Versorgungsnetz ausgefallen ist und/oder ein bestimmtes, bevorzugt windstarkes, Windereignis, wie bspw. Sturm vorherrscht.

Ferner wird während des Entladevorganges der Entladestrom des elektrischen Speichers erfasst, bevorzugt über der Zeit erfasst.

Das Erfassen des Entladestromes kann bspw. mittels einer Stromerfassung, bevorzugt direkt, am elektrischen Speicher durchgeführt werden.

Die Stromerfassung ist bspw. direkt an einem Ausgang des Akkumulators angeordnet und weist bspw. eine DC-Messung auf, vorzugsweise in einem Strombereich von -100A bis +100A.

Anschließend wird aus dem erfassten Entladestrom und der Dauer des Entladevorganges, also die Zeit vom Start des Entladevorganges bis zum Erreichen der vorbestimmten Entladespannung, die momentane Kapazität des elektrischen Speichers bestimmt.

Die Kapazität kann bspw. aus C = I * t ermittelt werden. Da der Strom ständig durch die Stromerfassung gemessen wird und bevorzugt durch eine aktive Steuerung geregelt wird, kann Kapazität als Integral (I * dt) ermittelt werden, bevorzugt in einer festen Taktung, insbesondere von weniger als 2 Sekunden, bevorzugt in einem 0,5s-Takt.

In einer bevorzugten Ausführungsform wird die Restkapazität des elektrischen Speichers in Abhängigkeit des Entladestromes ermittelt.

Die Restkapazität wird dann ins Verhältnis zur Nennkapazität gesetzt, um den sogenannten State-of-Health (kurz: SoH) zu bestimmen.

Vorzugsweise wird der Entladestrom über einen DC/DC-Steller der Netzeinspeisung der Windenergieanlage zur Verfügung gestellt. Es wird also insbesondere auch vorgeschlagen, den Enladestrom einem Zwischenkreis zuzuführen bzw. die Akkumulatoren nach dem Test aus diesem Zwischenkreis wieder zu laden.

In einer bevorzugten Ausführungsform wird das vorstehend oder nachstehend beschriebene Verfahren, insbesondere der Test, nicht durchgeführt oder abgebrochen, wenn wenigstens eine der nachfolgenden Bedingungen vorliegt: Windmangel, Anlagenstörung, Ausfall des elektrischen Versorgungsnetzes.

Es wird also insbesondere vorgeschlagen, den Entladevorgang solange durchzuführen bis der elektrische Speicher eine bestimmte Entladespannung aufweist.

Aus der Dauer dieses Entladevorganges und dem dabei erfassten Entladestrom wird dann die momentane bzw. aktuelle Kapazität des elektrischen Speichers bestimmt.

Diese so bestimmte momentane bzw. aktuelle Kapazität des elektrischen Speichers wird ins Verhältnis zur Nennkapazität des elektrischen Speichers gesetzt. Aus dem Quotienten aus aktueller Kapazität zur Nennkapazität wird dann die Betriebsfähigkeit des elektrischen Speichers abgeleitet, welcher bspw. bei 80 Prozent liegt. Ist dieser Quotient bspw. zu klein, sollte der elektrische Speicher ausgetauscht werden, insbesondere um eine Stromversorgung der Azimutverstellung stets sicherstellen zu können.

In einer bevorzugten Ausführungsform wird bei der Bestimmung der Kapazität die Umgebungstemperatur und/oder die Betriebstemperatur des elektrischen Speichers berücksichtigt.

Vorzugsweise wird der Entladestrom in das elektrische Versorgungsnetz eingespeist.

Es wird also insbesondere vorgeschlagen, den Entladestrom zu nutzen und nicht in thermische Energie umzuwandeln, bspw. über einen hochohmigen elektrischen Widerstand.

Vorzugsweise umfasst das Verfahren ferner den Schritt: Erstellen eines Betriebssignales, insbesondere für eine Windenergieanlagensteuereinheit, wobei das Betriebssignal eine zureichende Restkapazität des elektrischen Speichers indiziert.

Zusätzlich oder alternativ umfasst das Verfahren auch den Schritt: Erstellen eines Warnsignales, insbesondere für eine Windenergieanlagensteuereinheit, wobei das Warnsignal eine unzureichende Restkapazität des elektrischen Speichers indiziert.

Es wird also insbesondere auch vorgeschlagen, den Zustand des elektrischen Speichers an die Windenergieanlagensteuereinheit zu übergeben.

Dies kann insbesondere per Betriebs- und/oder Warnsignal erfolgen.

Das Betriebssignal gibt dabei insbesondere an, dass der elektrische Speicher funktionsfähig ist.

Das Warnsignal gibt dabei insbesondere an, dass der elektrische Speicher nicht mehr funktionsfähig bzw. eingeschränkt ist.

Es wird also insbesondere vorgeschlagen, dass der Test des elektrischen Speichers auf Funktionsfähig automatisiert durchgeführt wird. Der Test selbst wird wiederum bevorzugt manuell durch einen Servicemitarbeiter ausgelöst. Der Test kann somit zum Beispiel vor einer Taifun-Saison durchgeführt werden.

Vorzugsweise entspricht der Entladestrom einem Soll-Entladestrom, der über eine Stromgrenze eingestellt wird.

Es wird also insbesondere vorgeschlagen, dass der elektrische Speicher auf eine bestimmte Art und Weise entladen wird, nämlich mit einem vorbestimmten Soll-Entladestrom der bspw. über einen DC/DC-Steller eingestellt wird.

Bevorzugt wird hierfür eine Stromgrenze verwendet. Die Stromgrenze gibt den maximal zulässigen Entladestrom an.

Vorzugsweise wird der Entladestrom mittels eines Gleichspannungswandlers forciert bzw. eingestellt.

Der Entladestrom wird also insbesondere mittels eines Gleichspannungswandlers eingestellt, insbesondere so, dass der Entladestrom dem Soll-Entladestrom entspricht.

Bevorzugt ist der Gleichspannungswandler hierfür als DC/DC-Steller ausgeführt.

Vorzugsweise wird der Entladestrom einem Zwischenkreis, insbesondere einem Gleichspannungszwischenkreis, zugeführt.

Es wird also insbesondere vorgeschlagen, die elektrische Energie des Entladestromes nicht einfach in thermische Energie umzuwandeln, sondern sinnvoll zu verwenden.

Hierfür wird insbesondere vorgeschlagen, den Entladestrom in den Gleichspannungszwischenkreis des Leistungsumrichters der Windenergieanlage zu geben, insbesondere um den Entladestrom in das elektrische Versorgungsnetz einzuspeisen.

Vorzugsweise wird der Entladestrom anschließend aus dem Gleichspannungszwischenkreis in das elektrische Versorgungsnetz eingespeist.

Vorzugsweise wird der Entladestrom über einer Entladezeit erfasst.

Es wird also insbesondere vorgeschlagen, den Entladevorgang und insbesondere den Entladestrom über die gesamte Zeit zu erfassen bzw. die Dauer des Entladevorganges zu erfassen.

Vorzugsweise umfasst der Entladevorgang wenigstens eine Temperaturkompensation oder eine Entladekompensation.

Es wird also insbesondere vorgeschlagen, dass während des Entladevorganges, insbesondere bei der Erfassung des Entladestromes, eine Temperatur, bspw. die Umgebungstemperatur oder die Betriebstemperatur des elektrischen Speichers, oder der Entladestrom selbst berücksichtigt wird. Dem liegt die Erkenntnis zugrunde, dass je nach Temperatur und/oder Entladestrom, der elektrische Speicher andere Eigenschaften aufweist, wie bspw. eine schnellere Entladung.

Vorzugsweise liegt der bestimmte Zeitpunkt innerhalb eines vorbestimmten Zeitraumes, der unter Berücksichtigung des Standortes der Windenergieanlage ausgewählt worden ist.

Vorzugsweise wird das vorstehend oder nachstehend beschriebene Verfahren, insbesondere der Test, automatisch durchgeführt, wobei der Zeitpunkt zur Durchführung des Verfahrens unter Berücksichtigung eines Standortes der Windenergieanlage und/oder des Datums und/oder eines aktuellen Betriebszustandes des Akkumulators gewählt.

Vorzugsweise umfasst die Berücksichtigung des Standortes der Windenergieanlage Daten über wenigstens eines der nachfolgende Liste: geographische Daten des Aufstellungsortes der Windenergieanlage; Wetterdaten am Aufstellungsort der Windenergieanlage; meteorologische Daten zum Aufstellungsort der Windenergieanlage; Kalenderdaten und/oder Kalenderzeiträume.

Erfindungsgemäß wird ferner eine Windenergieanlage vorgeschlagen, wenigstens umfassend: einen aerodynamischen Rotor, der dazu eingerichtet ist, aus Wind eine mechanische Drehbewegung zu erzeugen; einen Generator, der dazu eingerichtet ist, aus der mechanischen Drehbewegung eine elektrische Energie zu erzeugen; einen Zwischenkreis, der dazu eingerichtet ist, die vom Generator erzeugte, elektrischen Energie einem Leistungswechselrichter bereitzustellen; einen Leistungswechselrichter, der dazu eingerichtet ist, die elektrische Energie aus dem Zwischenkreis in ein elektrisches Versorgungsnetz einzuspeisen; einen, mit dem Zwischenkreis verbunden elektrischen Speicher, der dazu eingerichtet ist: elektrische Energie mit dem Gleichspannungszwischenkreis auszutauschen und elektrische Energie zu speichern und elektrische Energie für eine unterbrechungsfreie Stromversorgung bereitzustellen, eine, mit dem Zwischenkreis und dem elektrischen Speicher verbundene unterbrechungsfreie Stromversorgung, die dazu eingerichtet ist, elektrische Leistung aus dem Gleichspannungszwischenkreis und/oder dem elektrischen Speicher für eine Azimutverstellung bereitzustellen.

Der Generator ist bspw. als 6-phasiger Synchrongenerator ausgeführt und erzeugt eine 2x3-phasige Wechselspannung.

Diese Wechselspannung wird mittels eines Gleichrichters in eine Gleichspannung gerichtet und an dem Zwischenkreis angelegt, der auch als Gleichspannungszwischenkreis bezeichnet werden kann.

Die Windenergieanlage weist zudem insbesondere eine elektrische Verbindung zwischen dem Zwischenkreis und der unterbrechungsfreien Stromversorgung und dem elektrischen Speicher auf.

Die unterbrechungsfreie Stromversorgung wird dabei insbesondere dazu verwendet, den Azimut der Windenergieanlage, insbesondere der Gondel der Windenergieanlage, mittels einer Azimutverstellung, insbesondere eines Azimutmotors, zu verstellen.

Vorzugsweise umfasst die Windenergieanlage ferner eine, mit dem Zwischenkreis und dem elektrischen Speicher verbundene unterbrechungsfreie Stromversorgung, die dazu eingerichtet ist, elektrische Leistung aus dem Gleichspannungszwischenkreis und/oder dem elektrischen Speicher für eine Azimutverstellung bereitzustellen.

Es wird also insbesondere vorgeschlagen, den elektrischen Speicher so auszulegen, dass der elektrische Speicher genügend elektrische Energie bereitstellen kann, um jederzeit den Azimut der Windenergieanlage zu verstellen, insbesondere auch dann, wenn die Windenergieanlage wegen eines Sturmes nicht betrieben werden kann und/oder das elektrische Versorgungsnetz aus- bzw. schwarzgefallen ist.

Vorzugsweise umfasst die Windenergieanlage ferner eine Azimutverstellung umfassend einen Azimutmoter, die dazu eingerichtet ist, den Azimutwinkel der Windenergieanlage mittels des Azimutmoters durch elektrische Leistung aus dem elektrischen Speicher zu verstellen.

Vorzugsweise ist die unterbrechungsfreie Stromversorgung dazu eingerichtet, wenigstens einen Azimutmotor der Azimutverstellung mit elektrischer Energie derart zu versorgen, dass die Windenergieanlage mittels des Azimutmotors in den Wind ausgerichtet werden kann.

Vorzugsweise ist die unterbrechungsfreie Stromversorgung auch dazu eingerichtet, den wenigstens einen Azimutmotor der Windenergieanlage auch während eines Ausfalls eines elektrischen Versorgungsnetzes, welches mit der Windenergieanlage elektrisch verbunden ist, mit elektrischer Energie derart zu versorgen, dass die Windenergieanlage mittels des Azimutmotors im Wind ausgerichtet werden kann.

Vorzugsweise umfasst die Windenergieanlage ferner einen Gleichrichter, der dazu eingerichtet ist, die vom Generator erzeugte elektrische Energie in eine Gleichspannung zu wandeln und dem Zwischenkreis bereitzustellen.

Vorzugsweise umfasst die Windenergieanlage ferner eine Steuereinheit, die dazu eingerichtet ist, ein vorstehend und/oder nachstehend beschriebenes Verfahren auszuführen.

Vorzugsweise ist der elektrische Speicher in einem Gehäuse angeordnet, welches eine Betriebstemperatur aufweist, die mittels eines Lüfters und/oder einer Heizung im Wesentlichen konstant gehalten wird.

Es wird also insbesondere auch vorgeschlagen, den elektrischen Speicher in einem Schrank anzuordnen und die Innentemperatur des Schrankes möglichst konstant zu halten, insbesondere um den elektrischen Speicher vor einer zu niedrigen und/oder zu hohen Temperatur zu schützen.

Die vorliegende Erfindung wird nun nachfolgend exemplarisch anhand von Ausführungsbeispielen unter Bezugnahme auf die begleitenden Figuren näher erläutert, wobei für gleiche oder ähnliche Baugruppen dieselben Bezugszeichen verwendet werden.
- Fig. 1: zeigt eine schematische Ansicht einer Windenergieanlage gemäß einer Ausführungsform.
- Fig. 2: zeigt einen schematischen Aufbau eines elektrischen Stranges einer Windenergieanlage gemäß einer Ausführungsform.
- Fig. 3: zeigt einen schematischen Ablauf eines Verfahrens zum Betreiben einer Windenergieanlage gemäß einer Ausführungsform.

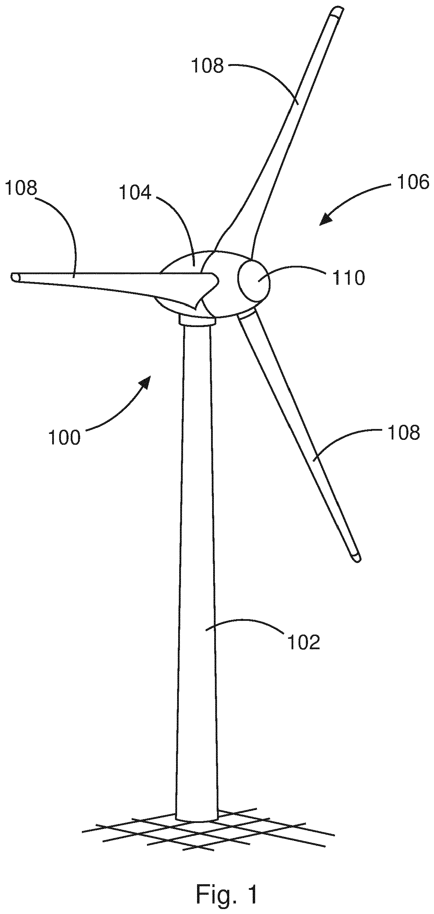

Fig. 1 zeigt eine schematische Ansicht einer Windenergieanlage 100 gemäß einer Ausführungsform.

Die Windenergieanlage 100 weist einen Turm 102 und eine Gondel 104 auf. An der Gondel 104 ist ein aerodynamischer Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

Zum Betreiben der Windenergieanlage ist ferner eine vorstehend oder nachstehend beschriebene Steuereinheit vorgesehen, die dazu eingerichtet ist, die Gondel der Windenergieanlage mittels einer Azimutverstellung im Wind auszurichten.

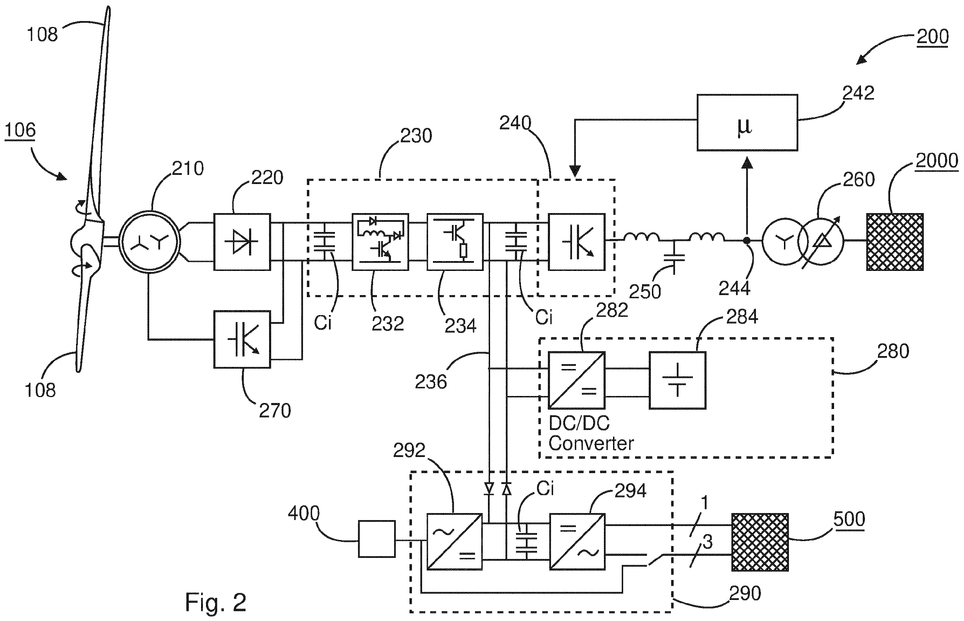

Fig. 2 zeigt einen schematischen Aufbau eines elektrischen Stranges 200 einer Windenergieanlage, insbesondere wie in Fig. 1 gezeigt, gemäß einer Ausführungsform.

Die Windenergieanlage umfasst einen aerodynamischen Rotor 106 mit drei Rotorblättern 108 der mit dem elektrischen Strang 200 verbunden ist.

Der elektrische Strang 200 weist einen Generator 210, einen Gleichrichter 220, einen Zwischenkreis 230, einen Wechselrichter 240, einen Filter 250, einen Transformator 260, eine Erregung 270, einen elektrischen Speicher 280 und eine unterbrechungsfreie Stromversorgung 290 auf.

Der aerodynamischen Rotor 106 ist dazu eingerichtet, aus Wind eine mechanische Drehbewegung zu erzeugen.

Diese mechanische Drehbewegung wird an den Generator 210 übergeben, bspw. mittels einer Welle.

Der Generator 210 ist dazu eingerichtet, aus der mechanischen Drehbewegung eine elektrische Energie zu erzeugen, insbesondere in Form eines mehrphasigen Wechselstromes, bspw. eines dreiphasigen Wechselstromes.

Dieser mehrphasige Wechselstrom wird an einen Gleichrichter 220 übergeben.

Der Gleichrichter 220 ist dazu eingerichtet, den mehrphasigen Wechselstrom in eine Gleichspannung zu wandeln.

Diese Gleichspannung wird an einen Zwischenkreis 230 angelegt.

Der Zwischenkreis 230 ist dazu eingerichtet, die vom Generator erzeugte, elektrische Energie an einem Leistungswechselrichter bereitzustellen.

Dieser Zwischenkreis 230 kann auch als Gleichspannungszwischenkreis bezeichnet werden.

Der Leistungswechselrichter 240 ist dazu eingerichtet, die elektrische Energie aus dem Zwischenkreis in ein elektrisches Versorgungsnetz 2000 einzuspeisen. Hierfür weist der Leistungswechselrichter 240 an seinem Ausgang bspw. einen Filter 250, bevorzugt einen LCL-Filter, und einen Transformator 260 auf. Die Steuerung des Leistungswechselrichters 240 erfolgt über eine Steuereinheit 242, die bspw. den Strom, die Spannung und die Frequenz am Ausgang des Leistungswechselrichters 242 erfasst.

Bevorzugt ist der Leistungswechselrichter 240 modularisiert ausgeführt, d.h. es gibt mehrere parallele Leistungswechselrichtermodule, die bevorzugt jeweils in einem Leistungsschrank untergebracht sind, bspw. zu je 400kW Nennleistung.

In einer bevorzugten Ausführungsform speist der Leistungswechselrichter 240 die elektrische Energie dreiphasig in das elektrische Versorgungsnetz 2000 ein.

Der Gleichrichter 220, der Zwischenkreis 230 und der Leistungswechselrichter 240 bilden zusammen einen Leistungsumrichter 220, 230, 240 aus, der bevorzugt als Vollumrichter ausgebildet ist, d.h. die gesamte, vom Generator 210 der Windenergieanlage erzeugte elektrische Energie wird über diesen Leistungsumrichter geführt.

Um die vom Generator 210 erzeugte elektrische Energie zu regeln, ist ferner eine Erregung 270 vorgesehen, die mit dem Zwischenkreis 230 verbunden ist.

Der Zwischenkreis 230 umfasst mehrere Kondensatoren Ci, einen Hochsetzsteller 232 und einen Chopper 234.

Die Kondensatoren Ci haben dabei insbesondere die Aufgabe, die Gleichspannung zu glätten und konstant zu halten. Diese Kondensatoren sind sowohl funktional als auch räumlich von dem hierin beschriebenen elektrischen Speicher verschieden.

Der Zwischenkreis 230 weist zudem einen Gleichspannungsabgang 236 auf, an dem der elektrische Speicher 280 und die unterbrechungsfreie Stromversorgung 290 angeordnet sind.

Der elektrische Speicher 280, der insbesondere als Akkumulator ausgeführt ist, bspw. einer 100Ah Akkumulator, ist über einen Gleichrichter 282 mit dem Gleichspannungsabgang 282 verbunden. Der elektrische Speicher ist also insbesondere nicht Bestandteil des Gleichspannungszwischenkreises 230 des Leistungswechselrichters 220, 230, 240.

Zudem umfasst der elektrische Speicher 280 eine kapazitive Speichereinheit 284, der eigentliche Akkumulator, die bevorzugt aus einem Akkumulator-Paket besteht, bspw. aus 24 Akkumulatoren zu jeweils 12 V, die bevorzugt zusammen 288 V bereitstellen.

Die unterbrechungsfreie Stromversorgung 290 ist direkt mit dem Gleichspannungsabgang 282 somit auch mit dem elektrischen Speicher 280 verbunden.

Zudem weist die unterbrechungsfreie Stromversorgung wenigstens einen Wechselrichter 292 auf, der mit dem 400V-Netz 400 der Windenergieanlage verbunden ist.

Zudem weist die unterbrechungsfreie Stromversorgung 290 einen Wechselrichter 294 auf, der mit dem Notversorgungsnetz 500 der Windenergieanlage verbunden ist.

Das Notversorgungsnetz 500 ist das elektrische Netz, welches die Azimutverstellung in jedem Fall mit elektrischer Energie versorgt, insbesondere um den Azimut der Windenergieanlage auch bei einem Taifun und/oder bei einem Ausfall des elektrischen Versorgungsnetzes verstellen zu können, wie vorstehend beschrieben.

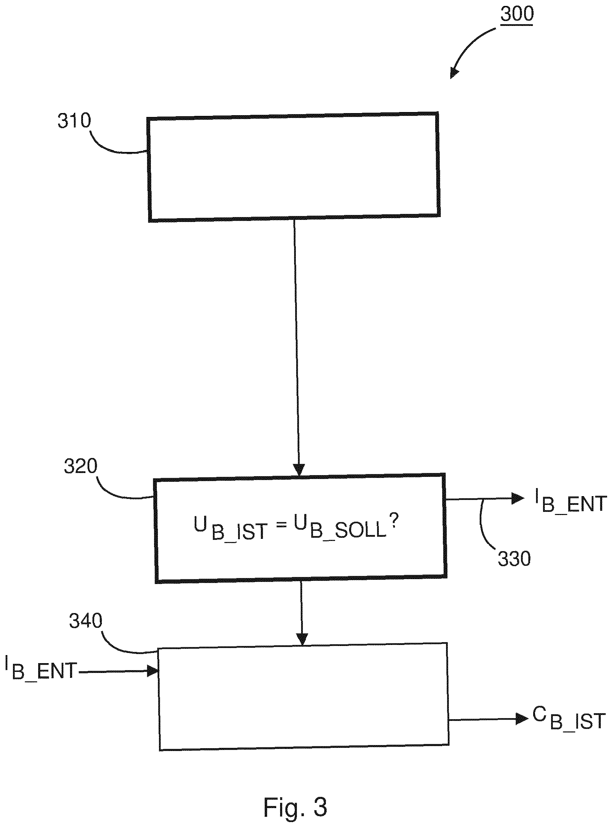

Fig. 3 zeigt einen schematischen Ablauf 300 eines Verfahrens zum Betreiben einer Windenergieanlage gemäß einer Ausführungsform.

In einem ersten Schritt 310 wird der Entladevorgang eines elektrischen Speichers einer unterbrechungsfreien Stromversorgung gestartet.

Dieser Entladevorgang 320 wird solange durchgeführt, bis der elektrische Speicher eine Ist-Entladespannung U_{B_ist} aufweist, die einer vorbestimmten Entladespannung U_{B_soll} entspricht. Diese vorbestimmten Entladespannung U_{B_soll} kann auch als Soll-Entladespannung bezeichnet werden.

Während dieses Entladevorganges wird der Entladestrom I_{B_ist} erfasst und anschließend daraus eine momentane Kapazität C_{B_ist} des elektrischen Speichers bestimmt. Dies ist durch Block 330 angedeutet

### Bezuqszeichenliste

- 100: Windenergieanlage
- 102: Turm, insbesondere der Windenergieanlage
- 104: Gondel, insbesondere der Windenergieanlage
- 106: aerodynamischer Rotor, insbesondere der Windenergieanlage
- 108: Rotorblatt, insbesondere der Windenergieanlage
- 110: Spinner, insbesondere der Windenergieanlage

- 200: elektrischer Strang, insbesondere der Windenergieanlage
- 210: Generator, insbesondere des elektrischen Stranges
- 220: Gleichrichter, insbesondere des elektrischen Stranges
- 230: Zwischenkreis, insbesondere des elektrischen Stranges
- 232: Hochsetzsteller, insbesondere des Zwischenkreises
- 234: Chopper, insbesondere des Zwischenkreises
- 236: Gleichspannungsabgang, insbesondere des Zwischenkreises
- 240: Leistungswechselrichter, insbesondere des elektrischen Stranges
- 250: Filter, insbesondere des elektrischen Stranges
- 260: Transformator, insbesondere des elektrischen Stranges
- 270: Erregung, insbesondere des elektrischen Stranges
- 280: elektrischer Speicher, insbesondere des elektrischen Stranges
- 282: Gleichrichter, insbesondere des elektrischen Speichers
- 284: kapazitive Speichereinheit, insbesondere des elektrischen Speichers
- 290: unterbrechungsfreie Stromversorgung, insbesondere der Windenergieanlage
- 292: Wechselrichter, insbesondere zum 400V-Netz der Windenergieanlage

- 300: Verfahren zum Betreiben einer Windenergieanlage
- 310: Starten eines Entladevorganges
- 320: Durchführen des Entladevorganges
- 400: 400V-Netz der Windenergieanlage
- 500: Notversorgungsnetz der Windenergieanlage

- Ci: Kondensator
- I_{B_ist}: Entladestrom des elektrischen Speichers
- C_{B_ist}: Kapazität des elektrischen Speichers, insbesondere momentane Kapazität
- U_{B_ist}: Ist-Entladespannung des elektrischen Speicherst
- U_{B_soll}: Soll-Entladespannung des elektrischen Speichers

## Patentansprüche

1. Verfahren (300) zum Betreiben einer Windenergieanlage, umfassend die Schritte:
- Starten (310) eines Entladevorganges eines elektrischen Speichers einer unterbrechungsfreien Stromversorgung, insbesondere zu einem bestimmten Zeitpunkt;
- Durchführen (320) des Entladevorganges bis der elektrische Speicher eine vorbestimmte Entladespannung aufweist;
- Erfassen (330) eines Entladestromes (I_{B_ist}) des elektrischen Speichers während des Entladevorganges;
- Bestimmen (340) einer Kapazität (C_{B_ist}) des elektrischen Speichers aus dem erfassten Entladestrom;

2. Verfahren nach Anspruch 1, wobei
- der Entladestrom in das elektrische Versorgungsnetz eingespeist wird.

3. Verfahren (300) nach Anspruch 1 oder 2, ferner umfassend den Schritt:
- Erstellen eines Betriebssignales, insbesondere für eine Windenergieanlagensteuereinheit, wobei das Betriebssignal eine zureichende Restkapazität der Batterie indiziert.

4. Verfahren (300) nach einem der vorstehenden Ansprüche, ferner umfassend den Schritt
- Erstellen eines Warnsignales, insbesondere für eine Windenergieanlagensteuereinheit, wobei das Warnsignal eine unzureichende Restkapazität des elektrischen Speichers indiziert.

5. Verfahren (300) nach einem der vorstehenden Ansprüche, wobei
- der Entladestrom einem Soll-Entladestrom entspricht, der über eine Stromgrenze eingestellt wird.

6. Verfahren (300) nach einem der vorstehenden Ansprüche, wobei
- der Entladestrom mittels eines Gleichspannungswandlers forciert wird.

7. Verfahren (300) nach einem der vorstehenden Ansprüche, wobei
- der Entladestrom einem Zwischenkreis, insbesondere einem Gleichspannungszwischenkreis, zugeführt wird.

8. Verfahren (300) nach einem der vorstehenden Ansprüche, wobei
- der Entladestrom, insbesondere aus dem Gleichspannungszwischenkreis, in das elektrische Versorgungsnetz eingespeist wird.

9. Verfahren (300) nach einem der vorstehenden Ansprüche, wobei
- wobei der Entladestrom über einer Entladezeit erfasst wird.

10. Verfahren (300) nach einem der vorstehenden Ansprüche, wobei
- der Entladevorgang wenigstens eines der nachfolgende Liste umfasst:
- eine Temperaturkompensation;
- eine Entladekompensation.

11. Verfahren (300) nach einem der vorstehenden Ansprüche, wobei
- der bestimmte Zeitpunkt innerhalb eines vorbestimmten Zeitraumes liegt, der unter Berücksichtigung des Standortes der Windenergieanlage ausgewählt worden ist.

12. Verfahren (300) nach einem der vorstehenden Ansprüche, wobei
- die Berücksichtigung des Standortes der Windenergieanlage Daten über wenigstens eines der nachfolgende Liste umfasst:
- geographische Daten des Aufstellungsortes der Windenergieanlage;
- Wetterdaten am Aufstellungsort der Windenergieanlage;
- meteorologische Daten zum Aufstellungsort der Windenergieanlage;
- Kalenderdaten und/oder Kalenderzeiträume.

13. Windenergieanlage (100), wenigstens umfassend:
- einen aerodynamischen Rotor, der dazu eingerichtet ist, aus Wind eine mechanische Drehbewegung zu erzeugen;
- einen Generator, der dazu eingerichtet ist, aus der mechanischen Drehbewegung eine elektrische Energie zu erzeugen;
- einen Zwischenkreis, der dazu eingerichtet ist, die vom Generator erzeugte, elektrischen Energie einem Leistungswechselrichter bereitzustellen;
- einen Leistungswechselrichter, der dazu eingerichtet ist, die elektrische Energie aus dem Zwischenkreis in ein elektrisches Versorgungsnetz einzuspeisen;
- einen, mit dem Zwischenkreis verbundenen elektrischen Speicher, der dazu eingerichtet ist:
- elektrische Energie mit dem Gleichspannungszwischenkreis auszutauschen und
- elektrische Energie zu speichern und
- elektrische Energie für eine unterbrechungsfreie Stromversorgung bereitzustellen,

14. Windenergieanlage (100) nach Anspruch 13, ferner umfassend:
- eine, mit dem Zwischenkreis und dem elektrischen Speicher verbundene unterbrechungsfreie Stromversorgung, die dazu eingerichtet ist, elektrische Leistung aus dem Gleichspannungszwischenkreis und/oder dem elektrischen Speicher für eine Azimutverstellung bereitzustellen.

15. Windenergieanlage (100) nach Anspruch 13 oder 14, ferner umfassend:
- eine Azimutverstellung umfassend einen Azimutmoter, die dazu eingerichtet ist, den Azimutwinkel der Windenergieanlage mittels des Azimutmoters durch elektrische Leistung aus dem elektrischen Speicher zu verstellen.

16. Windenergieanlage (100) nach einem der Ansprüche 13 bis 15, wobei
- die unterbrechungsfreie Stromversorgung dazu eingerichtet ist, wenigstens einen Azimutmotor der Azimutverstellung mit elektrischer Energie derart zu versorgen, dass die Windenergieanlage mittels des Azimutmotors in den Wind ausgerichtet werden kann.

17. Windenergieanlage (100) nach einem der Ansprüche 13 bis 16, wobei
- die Unterbrechungsfreie Stromversorgung auch dazu eingerichtet ist, den wenigstens einen Azimutmotor der Windenergieanlage auch während eines Ausfalls eines elektrischen Versorgungsnetzes, welches mit der Windenergieanlage elektrisch verbunden ist, mit elektrischer Energie derart zu versorgen, dass die Windenergieanlage mittels des Azimutmotors im Wind ausgerichtet werden kann.

18. Windenergieanlage (100) nach einem der Ansprüche 13 bis 17, ferner umfassend:
- einen Gleichrichter, der dazu eingerichtet ist, die vom Generator erzeugte elektrische Energie in eine Gleichspannung zu wandeln und dem Zwischenkreis bereitzustellen.

19. Windenergieanlage (100) nach einem der Ansprüche 13 bis 18, ferner umfassend:
- eine Steuereinheit, die dazu eingerichtet ist, ein Verfahren nach einem der Ansprüche 1 bis 12 auszuführen.
